Europäisches Patentamt

European Patent Office

Office européen des brevets

(19)

(11) Veröffentlichungsnummer: **0 231 491**
**B1**

(12) **EUROPÄISCHE PATENTSCHRIFT**

(45) Veröffentlichungstag der Patentschrift: **29.08.90**

(51) Int. Cl.⁵: **A 01 N 43/80,** A 01 N 25/02

(21) Anmeldenummer: **86117380.5**

(22) Anmeldetag: **13.12.86**

(54) **Wässrige Zubereitung von 1,2-Benzisothiazolin-3-on.**

(30) Priorität: **08.01.86 DE 3600271**

(43) Veröffentlichungstag der Anmeldung:
**12.08.87 Patentblatt 87/33**

(45) Bekanntmachung des Hinweises auf die
Patenterteilung:
**29.08.90 Patentblatt 90/35**

(84) Benannte Vertragsstaaten:
**CH DE FR GB IT LI**

(56) Entgegenhaltungen:
**DE-A-2 216 108**
**DE-A-2 840 273**
**GB-A-1 191 253**
**GB-A-1 330 531**

**Comprehensive Inorganic Chemistry pp. 340-2,
Bailar J.C. et al, Pergamon Press 1973**

**Die Akte enthält technische Angaben, die nach
dem Eingang der Anmeldung eingereicht
wurden und die nicht in dieser Patentschrift
enthalten sind.**

(73) Patentinhaber: **CASSELLA Aktiengesellschaft
Hanauer Landstrasse 526
D-6000 Frankfurt am Main 61 (DE)**

(72) Erfinder: **Bauer, Wolfgang, Dr.
Masurenstrasse 6
D-6457 Maintal 1 (DE)**
Erfinder: **Steckelberg, Willi, Dr.
Goldgrabenstrasse 24
D-6238 Hofheim (DE)**

(74) Vertreter: **Urbach, Hans-Georg, Dr. et al
Hanauer Landstrasse 526
D-6000 Frankfurt am Main 61 (DE)**

Courier Press, Leamington Spa, England.

# EP 0 231 491 B1

**Beschreibung**

1,2-Benzisothiazolin-3-on wird aufgrund seiner bakteriziden und fungiziden Eigenschaften in der Technik als Biozid zum Schutz von wäßrigen Medien gegen Infektionen durch Mikrooranismen verwendet. Für diese Anwendungszwecke ist es wünschenswert, daß das 1,2-Benzisothiazolin-3-on in Form einer flüssigen Zubereitung vorliegt, die beim Stehenlassen und bei einer Temperaturerniedrigung auf 0 bis 5°C keine Ausscheidungen, kein Absetzen und keine Verfestigungen bzw. Wirksamkeitsverluste zeigt.

Zur Herstellung von flüssigen Zubereitungen von 1,2-Benzisothiazolin-3-on ist es bereits bekannt, das bei der Synthese anfallende rohe 1,2-Benzisothiazolin-3-on in Form einer wäßrigen Dispersion zu verwenden. Derartige wäßrige Dispersionen sind aber nicht lagerstabil, da beim Stehenlassen ein Absetzen auftritt.

Es sind auch flüssige Zubereitungen von 1,2-Benzisothiazolin-3-on bekannt, die aus Lösungen von 1,2-Benzisothiazolin-3-on in einem Amin oder Amingemisch bestehen (GB-PS 1,191,253 und 1,330,531). Für bestimmte Anwendungszwecke sind jedoch diese Zubereitungen wegen ihres Amingehaltes nicht annehmbar.

Es war aus der DE—A1—28 40 273, Seite 3, vorletzter Absatz, ferner bekannt, daß 1,2-Benzisothiazolin-3-on mit Alkalimetallen Salze bildet und daß diese wasserlöslich sind und daß Lösungen von rohem 1,2-Benzisothiazolin-3-on in Propylenglykol oder Diethylenglykol hergestellt und Wasser zugesetzt werden können, um Lösungen herzustellen. Aus der genannten Literaturstelle war jedoch auch bekannt, daß durch diese Verfahren keine stabilen Lösungen mit einer für Handelszwecke ausreichenden Konzentration, d.h. einem Gehalt an 1,2-Benzisothiazolin-3-on von nicht weniger als ungefähr 5 Gew.-%, hergestellt werden können Nach der DE—A1—28 40 273 kann die Lagerstabilität derartiger flüssiger Präparate von 1,2-Benzisothiazolin-3-on durch Zusatz gewisser hydroxylischer organischer Lösungsmittel verbessert werden. Die flüssige 1,2-Benzisothiazolin-3-on enthaltende Zusammensetzung gemäß der DE—A1—28 40 273 enthält 5 bis 50 Gew.% eines Alkalisches von rohem 1,2-Benzisothiazolin-3-on in einem hydroxylischen organischen Lösungsmittel, das mindestens aus einem der folgenden ausgewählt ist: Dipropylenglykol, Tripropylenglykol, Polypropylenglykole, Polyethylenglykole, Niederalkylcarbitole, Methanol, Ethanol und Gemische aus mindestens einem dieser Lösungsmittel und Wasser. Als Alkalisalz von rohem 1,2-Benzisothiazolin-3-on wird in der DE—A1—28 40 273 vorzugsweise das Natriumsalz genannt, das auch in allen Ausführungsbeispielen verwendet wird. Daneben wird an einer einzigen Stelle auch das Lithiumsalz erwähnt: ("Das Alkalimetallsalz von rohem BIT kann beispielsweise das Lithiumsalz sein, aber insbesondere das Natriumsalz").

Nach der DE—A1—2840273 werden besonders gute Resultate mit einer Lösung erhalten, die ungefähr 20 Gew.% rohes 1,2-Benzisothiazolin-3-on in Form des Natriumsalzes und ungefähr 65 Gew.% Dipropylenglykol und im übrigen ca. 15 Gew.% Wasser enthält. Bei den in der DE—A1—2840273 angegebenen Beispielen liegt der Wassergehalt der flüssigen Zubereitungen zwischen 7 und 12,1 Gew.%, lediglich in Beispiel 3 wird bei Verwendung von Methylcarbitol ein Wassergehalt von 27,1 Gew.% erreicht. Aus verschiedenen Gründen ist es jedoch wünschenswert, daß derartige Zubereitungen möglichst wenige organisches Lösungsmittel und statt dessen möglichst viel Wasser enthalten.

Es wurde nun überraschenderweise gefunden, daß stabile wäßrige Zubereitungen eines Alkalisalzes von 1,2-Benzisothiazolin-3-on mit einer ausreichenden Konzentration an 1,2-Benzisothiazolin-3-on auch ohne die in der DE—A1—28 40 273 genannten hydroxylischen organischen Lösungsmittel hergestellt werden können und gleichzeitig der Wassergehalt der wässrigen Zubereitung auf mindestens 30 Gew.% erhöht werden kann, wenn man als Alkalisalz von 1,2-Benzisothiazolin-3-on das Lithiumsalz verwendet.

Die Erfindung betrifft die Verwendung einer ein Alkalisalz des 1,2-Benzisothiazolin-3-on enthaltenden wäßrigen Zubereitung, die das Lithiumsalz des 1,2-Benzisothiazolin-3-ons und mindestens 30 Gew.% Wasser enthält, als technisches Konservierungsmittel. Erfindungsgemäß wird vorzugsweise eine Zubereitung verwendet, die mindestens 40 Gew.%, ganz besonders bevorzugt mindestens 50 Gew.%, Wasser und vorzugsweise mindestens 5 Gew.%, insbesondere mindestens 10 Gew.% des Lithiumsalzes des 1,2-Benzisothiazolin-3-ons enthält.

Nach der vorliegenden Erfindung ist es z.B. möglich, eine rein wäßrige Lösung des Lithiumsalzes des 1,2-Benzisothiazolin-3-ons zu verwenden, die bei einem auf das freie 1,2-Benzisothiazolin-3-on bezogenen Gehalt von 10 Gew.% sowohl bei einer 4-wöchigen Lagerung bei Raumtemperatur als auch bei 5°C stabil ist, d.h. keine Ausscheidungen zeigt, während im Vergleich dazu bei einer entsprechend konzentrierten wäßrigen Lösung des Natriumsalzes sowohl bei der Lagerung bei 5°C als auch bei Raumtemperatur Auskristallisationen auftreten. Bei Raumtemperatur sind sogar noch 20 gew.%ige rein wäßrige Lösungen des Lithiumsalzes des 1,2-Benzisothiazolin-3-ons stabil. Durch Zusatz von 1,2-Propylenglykol zu den wäßrigen Lösungen des Lithiumsalzes des 1,2-Benzisothiazolin-3-ons läßt sich die Lagerstabilität, insbesondere höher konzentrierter Lösungen, bei tiefen Temperaturen weiter erhöhen. Auch dies war überraschend, da ein verwertbarer ähnlicher Effekt bei Lösungen des Natriumsalzes nicht auftritt und daher 1,2-Propylenglykol als alleiniger Zusatz eines hydroxylgruppenhaltige Lösungsmittels für eine wäßrige Lösung des Na-Salzes des 1,2-Benzisothiazolin-3-ons ungeeignet ist (vergl. DE—A1—28 40 273, Seite 5, zweiter Absatz). Eine erfindungsgemäße zu verwendende wäßrige Lösung des Lithiumsalzes, die 50 Gew.% Wasser, 30 Gew.% 1,2-Propylenglykol und 20 Gew.% Lithiumsalz des 1,2-Benzisothiazolin-3-ons enthält, ist sowohl bei einer 4-wöchigen Lagerung bei Raumtemperatur als auch bei der Lagerung bsi 5°C stabil, während im Vergleich dazu eine analog zusammengesetzte Lösung des Natriumsalzes sowohl bei der Lagerung bei 5°C als auch bei der Lagerung bei Raumtemperatur Auskristillisationen zeigt.

Erfindungsgemäß zu verwendende rein wäßrige Zubereitungen des Lithiumsalzes des 1,2-Benzisothiazolin-3-ons werden z.B. mit einer Konzentration an Lithiumsalz des 1,2-Benzisothiazolin-3-ons von mindestens 5 Gew.%, beispielsweise 5 bis 25 Gew.%, vorzugsweise 5 bis 20 Gew.%, hergestellt. Sie besitzen eine hohe Lagerstabilität.

Das Gewichtsverhältnis Lithiumsalz des 1,2-Benzisothiazolin-3-ons: Wasser beträgt in derartigen rein wäßrigen Lösungen demnach z.B. (5 bis 25):(95 bis 75), vorzugsweise (5 bis 20):(95 bis 80).

Die Möglichkeit, rein wäßrige Zubereitungen von 1,2-Benzisothiazolin-3-on mit einer ausreichenden Anwendungskonzentration herzustellen und zu verwenden, bietet neben wirtschaftlichen auch ökologische Vorteile, da eine Umweltbelastung durch organische Lösungsmittel entfällt.

Die Lagerstabilität hochkonzentrierter wäßriger Lösungen des Lithiumsalzes des 1,2-Benzisothiazolin-3-ons läßt sich bei tiefen Temperaturen durch Zusatz von organischen Lösungsmitteln verbessern, die mit Wasser mischbar sind.

Wie bereits erwähnt, ist als ein solches Lösungsmittel z.B. 1,2-Propylenglykol geeignet. Weiter sind z.B. geeignet: niedere Alkohole, Glykole, Di- und Triglykole, wie z.B. Methanol, Ethanol, Propanol, Ethylenglykol, Diethylenglykol, Triethylenglykol, Glykolether, wie z.B. Ethylenglykolmono-methylether, Ethylenglykol-monoethylether, 1,2-Propylenglykol-mono-methylether, Diethylenglykol-mono-methylether, Diethylenglykol-mono-ethylether, Diethylenglykol-mono-propylether, Diethylenglykol-mono-butylether oder Gemische derartiger Lösungsmittel.

Mit Wasser und ein oder mehrere organische mit Wasser mischbare organische Lösungsmittel enthaltenden Lösungsmittelgemischen lassen sich erfindungsgemäß zu verwendende Zubereitungen herstellen, die bei einem Gehalt an Lithiumsalz des 1,2-Benzisothiazolin-3-ons von z.B. 5 bis 30 Gew.% eine hohe Lagerstabilität aufweisen.

Das Gewichtsverhältnis Lithiumsalz des 1,2-Benzisothiazolin-3-ons: Wasser: mit Wasser mischbares organisches Lösungsmittel kann z.B. (5 bis 30):(95 bis 30):(0 bis 40), vorzugsweise (5 bis 20):(95 bis 40):(0 bis 40) betragen. Die erfindungsgemäß zu verwendenden Zubereitungen mit mehr als 25 Gew.% Lithiumsalz enthalten normalerweise mehr als 5 Gew.% eines mit Wasser mischbaren organischen Lösungsmittels.

Die erfindungsgemäß zu verwendenden wäßrigen Zubereitungen können dadurch hergestellt werden, daß das Lithiumsalz des 1,2-Benzisothiazolin-3-ons in Wasser oder in einem Gemisch aus Wasser und einem oder mehreren mit Wasser mischbaren organischen Lösungsmitteln, zweckmäßigerweise unter Durchmischung und/oder leichter Erhöhung der Temperatur eingetragen und dann gelöst wird. Dabei werden die Mengenverhältnisse so gewählt, daß die entstehenden Zubereitungen mindestens 30 Gew.% Wasser enthalten. Es ist auch möglich, von reinem oder rohem 1,2-Benzisothiazolin-3-on auszugehen und daraus das Lithiumsalz herzustellen.

Rohes 1,2-Benzisothiazolin-3-on ist das bei der Herstellung von 1,2-Benzisothiazolin-3-on anfallende Rohprodukt. Zur Herstellung wäßriger Lösungen des Lithiumsalzes wird dieses Rohprodukt, z.B. in Form des bei der Herstellung von 1,2-Benzisothiazolin-3-on anfallenden wasserfeuchten Preßkuchens, oder reines 1,2-Benzisothiazolin-3-on in Wasser suspendiert und, zweckmäßigerweise unter Rühren, und gelindem Erwärmen auf z.B. 30 bis 40°C, mit äquivalenten Mengen oder einem geringen Überschuß bis z.B. 0,1 mol Lithiumhydroxid und/oder Lithiumcarbonat und/oder Trilithiumphosphat versetzt. Man erhält auf diese Weise direkt rein wäßrige Lösungen des Lithiumsalzes des 1,2-Benzisothiazolin-3-ons. Auch die umgekehrte Arbeitsweise, d.h. das Eintragen von reinem oder rohem 1,2-Benzisothiazolin-3-on in wäßrige Lösungen von Lithiumhydroxid und/oder Lithiumcarbonat und/oder Trilithiumphosphat, ebenfalls zweckmäßigerweise unter Rühren und gelindem Erwärmen auf z.B. 30 bis 40°C, führt zu erfindungsgemäß zu verwendenden rein wäßrigen Lösungen. Gewünschtenfalls wird dann noch ein mit Wasser mischbares organisches Lösungsmittel oder Lösungsmittelgemisch zugeführt.

Überraschenderweise wurde weiterhin gefunden, daß die erfindungsgemäß zu verwendenden, das Lithiumsalz des 1,2-Benzisothiazolin-3-ons enthaltenden wäßrigen Zubereitungen gegenüber manchen Mikroorganismen, wie z.B. Schimmelpilzen, oder manchen Bakterien, wie z.B. Escherichia coli, eine zum Teil deutlich höhere biologische Aktivität besitzen, im Vergleich zu Zubereitungen, die das Natriumsalz des 1,2-Benzisothiazolin-3-ons enthalten. Z.B. Zeite sich, daß Sporen von Aspergillus niger nach einem Behandlung mit einer erfindungsgemäß zu verwendenden das Lithiumsalz des 1,2-Benzisothiazolin-3-ons enthaltenden wäßrigen Zubereitung wesentlich gehemmter auskeimten als nach einer Behandlung mit einer das Natriumsalz des 1,2-Benzisothiazolin-3-ons enthaltenden Zubereitung. Bei der Bestimmung der Absterberate von Aspergillus niger zeigte es sich, daß die mit einer erfindungsgemäß zu verwendenden das Lithiumsalz des 1,2-Benzisothiazolin-3-ons enthaltenden wäßrigen Zubereitung behandelten Proben im Verlauf von 3 Tagen eine bis zu dem Faktor 11 ansteigende geringere Keimzahl aufweisen als Proben, die im Vergleich dazu mit einer das Natriumsalz des 1,2-Benzisothiazolin-3-ons enthaltenden flüssigen Zubereitung behandelt worden waren. Auch die Absterbegeschwindigkeit der Keime ist bei einer wäßrigen Lösung des Lithiumsalzes des 1,2-Benzisothiazolin-3-ons signifikant höher als bei einer Lösung des Natriumsalzes des 1,2-Benzisothiazolin-3-ons.

Die erfindungsgemäß zu verwendenden wäßrigen Zubereitungen zeigen neben der überraschenderweise gesteigerten fungiziden Aktivität eine gute antimikrobielle Wirkung gegenüber grampositiven und gramnegativen Bakterien, Hefen und Algen in einem breiten pH-Bereich, insbesondere im pH-Bereich von 4 bis 12.

Die erfindungsgemäß zu verwendenden wäßrigen Zubereitungen werden insbeosondere als technische Konservierungsmittel eingesetzt und dienen u.a. beispielsweise zum Schutz bzw. zur Konservierung von Polystyrol-, Polyacrylat- und/oder Polyvinylacetat-Dispersionen, Farben, Bohr- und Schneideölen, Klebstoffen, Papierbeschichtungsmassen, Textilweichmachern, Schlichten auf Stärkebasis, Waschrohstoffen, Reinigungs- und Poliermitteln, Spinnbädern, Lederfinishes, Silikon- und Bitumenemulsionen und zur Behandlung von Industriewässern in der Papierherstellung oder von industriellem Kühlwasser. Die erfindungsgemäß zu verwendenden wäßrigen Zubereitungen weisen normalerweise pH-Werte von 7 bis 14, insbesondere pH 8,5 bis 12,5, auf.

Je nach Einsatzbereich kann es zweckmäßig sein, während oder nach der Herstellung der erfindungsgemäß zu verwendenden wäßrigen Zubereitungen an sich bekannte nichtionogene und/oder anionische Hilfsmittel, die Emulgierhilfsmittel, Dispergierhilfsmittel und/oder Tenside zuzusetzen. Diese Maßnahme kann erforderlich sein, wenn bei Anwendung und Verdünnung der erfindungsgemäß zu verwendenden Zubereitungen saure oder neutrale pH-Werte eingestellt werden und eine gute Feinverteilung des bei diesen pH-Werten teilweise ausgefallenen 1,2-Benzisothiazol-3-ons erwünscht ist. Biologisch gut abbaubare Hilfsmittel sind dabei bevorzugt. Die Menge der zugesetzten Hilfsmittel, wie Emulgier- und/oder Dispergierhilfsmittel und/oder Tenside beträgt normalerweise maximal 5 Gew.%, bezogen auf die Zubereitung. Emulgierhilfsmittel, Dispergierhilfsmittel, Tenside und dergl. können in manchen Fällen das organische Lösungsmittel in den erfindungsgemäß zu verwendenden Zubereitungen ganz oder teilweise ersetzen.

Ferner kann es zweckmäßig sein, zur Komplexierung von mehrwertigen Kationen, wie Calcium- oder Magnesiumionen, an sich bekannte Komplexbildner oder Wasserenthärtungsmittel während oder nach der Herstellung zuzusetzen. Die Menge der zugesetzten Komplexbildner oder Wasserenthärtungsmittel beträgt normalerweise maximal 1 Gew.%, bezogen auf die Zubereitung.

Auch die Komplexbildner oder Wasserenthärter werden wie die Emulgier- oder Dispergierhilfsmittel und/oder Tenside während oder nach der Herstellung den erfindungsgemäß zu verwendenden Zubereitungen zugesetzt. Normalerweise vermindert sich die Menge der gegebenenfalls zur Anwendung kommenden organischen Lösungsmittel um die Menge der gegebenenfalls zur Anwendung kommenden Hilfsmittel und/oder Komplexbildner oder Wasserenthärtungsmittel.

Die vorliegende Erfindung wird durch folgende Beispiele weiter erläutert, wobei Teile und Prozentgehalte durch Gewichtsteile und Gewichtsprozente ausgedrückt sind.

Beispiel 1

170,6 g 1,2-Benzisothiazolin-3-on in Form eines 98,5%igen Pulvers werden mit einer Lösung von 48,3 g Lithiumhydroxid-Monohydrat in 750 ml Wasser versetzt und unter Rühren und Erwärmen auf 30 bis 40°C gelöst und mit Wasser auf 1 kg eingestellt. Die erhaltene wäßrige Lösung ist bei 0 bis 5°C lagerstabil und enthält 16,8% Lithiumsalz des 1,2-Benzisothiazolin-3-ons und 83,2% Wasser.

Vergleichsbeispiel

Eine entsprechend Beispiel 1 hergestellte wäßrige Lösung von 1,2-Benzisothiazolin-3-on-Natrium ist nicht lagerstabil; Lagerung bei 0 bis 5°C führt zur Abscheidung von 104 g 1,2-Benzisothiazolin-3-on-Natrium; das wäßrige Filtrat enthält 8,8% 1,2-Benzisothiazolin-3-on-Natrium.

Beispiel 2

Entsprechend der Arbeitsweise des Beispiels 1 werden statt 170,6 g 1,2-Benzisothiazolin-3-on mit einem Reingehalt von 98,5% 229,2 g 1,2-Benzisothiazolin-3-on mit einem Reingehalt von 94,5% und 60,8 g Lithiumhydroxid-Monohydrat eingesetzt. Nach Einstellen eines Endgewichts von 1 kg wird eine wäßrige Lösung erhalten, die 22,5% 1,2-Benzisothiazol-3-on-Lithium und 77,5% Wasser enthält.

Der folgenden Tabelle sind weitere Beispiele erfindungsgemäß zu verwendender wäßriger Einstellungen von 1,2-Benzisothiazolin-3-on-Lithium (I) zu entnehmen, wobei in Spalte 2 die Konzentration an 1,2-Benzisothiazolin-3-on-Lithium und in Spalte 3 das Lösungsmittel und gegebenenfalls zugesetzte Hilfsmittel aufgeführt sind.

EP 0 231 491 B1

TABELLE 1

| Beispiel | Konzentration (I) (%) | Lösungsmittel und ggf vorhandenes Hilfsmittel | (%) |
|---|---|---|---|
| 3 | 25 | ®Emulsogen EL[1]<br>Wasser | 2<br>73 |
| 4 | 27,5 | ®Arkopal N 080[2]<br>Wasser | 5<br>67,5 |
| 5 | 28 | ®Genapol X 080[3]<br>Wasser | 4<br>68 |
| 6 | 24 | ®Hostapur SAS 93[4]<br>Wasser | 1<br>75 |
| 7 | 21 | ®Aquamollin BC hochkonz [5]<br>Wasser | 0,5<br>78,5 |
| 8 | 20 | Propylenglykol-1,2<br>Wasser | 30<br>50 |
| 9 | 25 | Propylenglykol-1,2<br>®Humectol C hochkonz[6]<br>Wasser | 20<br>1<br>54 |

[1] ®Emulsogen ist ein eingetragenes Warenzeichen der Hoechst AG, Frankfurt am Main 80. ®Emulsogen EL ist ein Emulgator auf der Basis eines Fettsäurepolyglykolesters.

[2] ®Arkopal ist ein eingetragenes Warenzeichen der Hoechst AG. ®Arkopal NO 80 ist ein nichtionogenes Tensid auf der Basis eines Nonylphenolpolyglykolethers.

[3] ®Genapol ist ein eingetragenes Warenzeichen der Hoechst AG. Genapol X 080 ist ein Fettalkoholpolyglykolether.

[4] ®Hostapur ist ein eingetragenes Warenzeichen der Hoechst AG. ®Hostapur SAS 93 ist ein biologisch abbaubares Alkansulfonat.

[5] ®Aquamollin ist ein eingetragenes Warenzeichen der Cassella AG, Frankfurt am Main 61. ®Aquamollin BC hochkonz ist ein Wasserenthärungsmittel auf der Basis von Ethylendiamintetraessigsäure.

[6] ®Humectol ist ein eingetragenes Warenzeichen der Cassella AG. ®Humectol C hochkonz. ist ein Netzmittel auf der Basis eines sulfonierten Ölsäureamidderivats.

Beispiel 11

An wäßrigen Lösungen des Lithiumsalzes und des Natriumsalzes des 1,2-Benzisothiazolin-3-ons, die beide 0,0016 Gew.% 1,2-Benzisothiazolin-3-on enthalten, werden die Absterberaten von Aspergillus niger bestimmt. Hierzu wird eine Keimsuspension von Aspergillus niger in die zu prüfende Lösung einpipettiert und nach bestimmten Zeiten die Keimzahl nach dem Koch'schen Plattengußverfahren (siehe z.B. K. H. Wallhäußer in "Praxis der Sterilisation, Desinfektion, Konservierung", G. Thieme Verlag, Stuttgart, 1984) gemessen.

Die Keimsuspension wird in bekannter Weise durch Abschwemmung einer Stammkultur von Aspergillus niger mit physiologischer Kochsalzlösung und Verdünnung der Abschwemmung mit physiologischer Kochsalzlösung und Aufteilung gewonnen.

Es wurden die in der Tabelle 2 angegebenen Werte gefunden. Im Vergleich dazu wurden bei einer Wuchskontrolle mit destilliertem Wasser nach 5 min 365 und nach 72 h 295 Keime pro $ml \times 10^{-3}$ gezählt.

5

TABELLE 2

Bestimmung der Absterberate von Aspergillus niger unter Verwendung einer Li- und Na-Salzlösung von 1,2-Benzisozolin-3-on

| | Anzahl der Keime pro ml×$10^{-3}$ nach | | | |
| | 5 min | 24 h | 48 h | 72 h |
|---|---|---|---|---|
| Na-Salzlösung | 345 | 123 | 51 | 22 |
| Li-Salzlösung | 275 | 91 | 10,2 | 1,95 |
| Faktor=$\dfrac{\text{Zeile 1}}{\text{Zeile 2}}$ | 1,25 | 1,35 | 5 | 11,28 |

Die geprüften Li-Salzlösung und Na-Salzlösung sinde beide in Bezug auf das 1,2-Benzisothiazolin-3-on 0,0016%ig.

**Patentansprüche**

1. Verwendung einer wäßrigen Zubereitung, die das Lithiumsalz des 1,2-Benzisothiazolin-3-ons und mindestens 30 Gew.% Wasser enthält, als technisches Konservierungsmittel.

2. Verwendung nach Anspruch 1, dadurch gekennzeichnet, daß eine wäßrige Zubereitung verwendet wird, die mindestens 5 Gew.% des Lithiumsalzes enthält.

3. Verwendung nach Anspruch 1 und/oder 2, dadurch gekennzeichnet, daß eine wäßrige Zubereitung verwendet wird, die das Lithiumsalz, Wasser und ein mit Wasser mischbares organisches Lösungsmittel im Gewichtsverhältnis (5 bis 30):(95 bis 30):(0 bis 40) enthält.

4. Verwendung nach einem der mehreren der Ansprüche 1 bis 3, dadurch gekennzeichnet, daß eine wäßrige Zubereitung verwendet wird, die das Lithiumsalz, Wasser und ein mit Wasser mischbares organisches Lösungsmittel im Gewichtsverhältnis (5 bis 20):(95 bis 40):(0 bis 40) enthält.

5. Verwendung nach Anspruch 3 und/oder 4, dadurch gekennzeichnet, daß eine wäßrige Zubereitung verwendet wird, die als mit Wasser mischbares organisches Lösungsmittel 1,2-Propylenglykol enthält.

6. Verwendung nach einem oder mehreren der Ansprüche 1 bis 5, dadurch gekennzeichnet, daß eine wäßrige Zubereitung verwendet wird, die ein Dispergierhilfsmittel, Emulgierhilfsmittel und/oder ein Tensid in Mengen von 0 bis 5 Gew.% und/oder einen Komplexbildner oder ein Wasserenthärtungsmittel in Mengen von 0 bis 1 Gew.% enthält.

7. Verwendung nach einem oder mehreren der Ansprüche 1 bis 6, dadurch gekennzeichnet, daß eine wäßrige Zubereitung verwendet wird, die mindestens 10 Gew.% des Lithiumsalzes enthält.

8. Verwendung nach einem oder mehreren der Ansprüche 1 bis 7, dadurch gekennzeichnet, daß eine wäßrige Zubereitung verwendet wird, die mindestens 50 Gew.% Wasser enthält.

**Revendications**

1. Application, comme agent de conservation industriel, d'une composition aqueuse qui contient le sel de lithium de la benzisothiazoline-1,2-one-3 et au moins 30% en poids d'eau.

2. Application selon la revendication 1, caractérisée en ce qu'on utilise une composition aqueuse qui contient au moins 5% en poids du sel de lithium.

3. Application selon l'une des revendications 1 et 2, caractérisée en ce qu'on utilise une composition aqueuse qui contient le sel de lithium, de l'eau et un solvant organique miscible à l'eau en un rapport pondéral de (5 à 30):(95 à 30):(0 à 40).

4. Application selon l'une quelconque des revendications 1 à 3, caractérisée en ce qu'on utilise une composition aqueuse qui contient le sel de lithium, de l'eau et un solvant organique miscible à l'eau dans un rapport pondéral de (5 à 20):(95 à 40):(0 à 40).

5. Application selon l'une des revendications 3 et 4, caractérisée en ce qu'on utilise une composition aqueuse qui contient du propylène-glycol-1,2 comme solvant organique miscible à l'eau.

6. Application selon l'une quelconque des revendications 1 à 5, caractérisée en ce qu'on utilise une composition aqueuse qui contient un dispersant, un émulsionnant et/ou un surfactif en des quantités de 0 à 5% en poids et/ou un complexant ou un adoucisseur d'eau en des quantités de 0 à 1% en poids.

7. Application selon l'une quelconque des revendications 1 à 6, caractérisée en ce qu'on utilise une composition aqueuse qui contient au moins 10% en poids du sel de lithium.

8. Application selon l'une quelconque des revendications 1 à 7, caractérisée en ce qu'un utilise une composition aqueuse qui contient au moins 50% en poids d'eau.

# EP 0 231 491 B1

**Claims**

1. Use of an aqueous formulation containing the lithium salt of the 1,2-benzisothiazolin-3-one and at least 30% by weight of water, as an industrial preservative.

2. Use according to Claim 1, characterized in that an aqueous formulation is used which contains at least 5% by weight of lithium salt.

3. Use according to Claim 1 and/or 2, characterized in that an aqueous formulation is used which contains the lithium salt, water, and a water-miscible organic solvent in a weight ratio of (5 to 30):(95 to 30):(0 to 40).

4. Use according to one or more of Claims 1 to 3, characterized in that an aqueous formulation is used which contains the lithium salt, water and a water-miscible organic solvent in a weight ratio of (5 to 20):(95 to 40):(0 to 40).

5. Use according to Claim 3 and/or 4, characterized in that an aqueous formulation is used which contains 1,2-propyleneglycol as water-miscible organic solvent.

6. Use according to one or more of Claims 1 to 5, characterized in that an aqueous formulation is used which contains a dispersing auxiliary, emulsifying auxiliary and/or surfactant in amounts of 0 to 5% by weight and/or a complexing agent or a water softener in amounts of 0 to 1% by weight.

7. Use according to one or more of Claims 1 to 6, characterized in that an aqueous formulation is used which contains at least 10% by weight of the lithium salt.

8. Use according to one or more of Claims 1 to 7, characterized in that an aqueous formulation is used which contains at least 50% by weight of water.

7